# FASCICULE DE BREVET EUROPEEN

(11) **EP 0 433 474 B1**
(45) Date de publication et mention de la délivrance du brevet: **28.07.1993**
(21) Numéro de dépôt: 89123416.3
(22) Date de dépôt: 19.12.1989
(51) Int. Cl.: A23C 1/12, A23C 9/15, A23C 9/152

(54) **Procédé de préparation d'un produit laitier évaporé**
Verfahren zur Herstellung eines konzentrierten Milchprodukts
Process for preparing a concentrated milk product

(43) Date de publication de la demande: 26.06.1991
(73) Titulaire: SOCIETE DES PRODUITS NESTLE S.A., 1800 Vevey (CH)
(72) Inventeur: Dalan, Ernesto, CH-1807 Blonay (CH); Henggeler, Markus André, CH-3652 Hilterfingen (CH)

(56) Documents cités:
- BE-A- 571 931
- US-A- 2 860 988
- US-A- 2 886 450

## Description

La présente invention concerne un procédé de préparation d'un produit laitier évaporé contenant de la matière grasse.

Le lait ou la crème évaporé est préparé à partir du lait entier ou de la crème par élimination d'une partie de l'eau qu'il ou elle contient. La concentration a pour effet de rapprocher les globules gras ce qui peut provoquer une remontée de la matière grasse durant l'entreposage. Enfin, le lait évaporé étant destiné à être conservé longtemps doit être stérilisé. Lorsque la stérilisation est mise en oeuvre par un traitement thermique d'appertisation après conditionnement, par exemple dans des boîtes, il y a un risque accru de déstabilisation de la phase liquide par la chaleur du fait de la perturbation du système caséinate, phosphate de calcium consécutive à la concentration. A l'entreposage, le lait ainsi traité peut s'épaissir, puis gélifier. Une manière usuelle de pallier ce dernier inconvénient est d'ajouter des sels de stabilisation comme par exemple le phosphate disodique ou le citrate trisodique. Cependant, ces additifs sont de plus en plus contestés par les législations alimentaires. Une alternative à la stérilisation par appertisation est le conditionnement aseptique du lait évaporé ayant été stérilisé en ligne, par exemple par ultra haute température ou haute température courte durée. Ce dernier procédé n'empêche pas une cristallisation préjudiciable du citrate de calcium, voire une gélification à l'entreposage.

US-A-2886450 concerne un procédé de production de lait évaporé dans lequel on surconcentre le lait, on le traite thermiquement on dilue le concentrat thermisé avec de l'eau, puis on le stérilise par ultra haute température.

US-A-2860988 a trait à un procédé de production de lait évaporé dans lequel on pasteurise le lait, puis on le concentre, on refroidit le concentrat, on l'emballe, puis on le congèle.

Le but de l'invention est de fournir un procédé de préparation d'un produit laitier évaporé exempt d'additifs non-lactiques stable à l'entreposage et résistant à l'acidité du café.

L'invention concerne donc un procédé de préparation d'un produit laitier évaporé contenant de la matière grasse stable à l'entreposage et exempt d'additifs non-lactiques, dans lequel on traite thermiquement un produit laitier dont le rapport pondéral matière grasse:matière sèche non grasse est 0,1:1 à 1,2:1, on le concentre jusqu'à une teneur en matière sèche de 20 à 40% en poids puis on stérilise le concentrat.

Selon l'invention, le but assigné est atteint par le fait que l'on homogénéise le produit laitier, on traite thermiquement l'homogénéisat avant de le concentrer et on traite thermiquement puis homogénéise le concentrat avant de le stériliser.

Pour mettre en oeuvre le procédé, on standardise le cas échéant le lait entier, c'est-à-dire qu'on ajuste les quantités pondérales respectives de matière grasse et de solides non gras aux valeurs désirées par addition selon les besoins, par exemple de lait écrémé, de crème ou d'huile de beurre (matière grasse lactique anhydre).

Une fois cette standardisation opérée, on préchauffe le produit laitier à 50-100°C puis on l'homogénéise dans des conditions poussées. Le but de l'homogénéisation est d'augmenter la surface des globules gras de manière à mieux lier les protéines et compenser ainsi l'insuffisance relative de lipides membranaires. Par homogénéisation poussée, on entend que le produit est traité en un ou plusieurs passages dans un homogénéisateur à un ou plusieurs étages à des pressions allant de 50 à 500 bar, de préférence en un passage dans deux étages à 200 - 300 bar pour le premier, puis à environ 50 bar pour le second. De cette manière, on assure une réduction et une répartition homogène de la dimensions des globules gras.

On traite ensuite l'homogénéisat thermiquement de manière a stabiliser les liaisons entre les protéines, de sorte qu'elles subsistent après la concentration. Ce traitement thermique peut avoir lieu par chauffage direct ou indirect dans tout appareil usuel permettant de maintenir le liquide à 80-150°C pendant 1 à 1200 s. Bien entendu la limite supérieure de la température correspond à la limite inférieure de la durée. On peut ainsi par exemple combiner un échangeur à plaques avec un tube d'attente et une vanne de contre-pression réglée, deux échangeurs à plaques reliés par un tube d'attente ou encore un échangeur à plaques associé à une vanne de contre-pression réglée et une cuve d'attente thermostatisée.

Après ce traitement thermique, on concentre le liquide par évaporation avec expansion dans un évaporateur à flot tombant à simple ou de préférence à multiple effet à une teneur en matière sèche de 20 à 40% et de préférence 24-35% en poids.

Une fois concentré, le liquide est à nouveau homogénéisé, de préférence en un passage dans un homogénéisateur à deux étages à 75-175 bar pour le premier et environ 25 bar pour le second. Le but de cette seconde homogénéisation est de désintégrer les grappes de globules gras qui se sont formées durant l'étape de concentration et le cas échéant de réduire encore la taille de ces globules gras.

Après la seconde homogénéisation, on peut procéder directement au traitement thermique du concentrat homogénéisé ou alors procéder à un entreposage intermédiaire. Dans le premier cas, on règle le cas échéant la teneur en matière sèche du concentrat à la valeur désirée pour le produit final, par exemple 24 à 33% en poids par addition d'eau. Dans le second cas, on refroidit le concentrat à 1-10°C et de préférence à 4-8°C, on règle sa teneur en matière sèche comme ci-dessus et on le laisse au repos pendant 1 à 24 h. On peut aussi procéder directement au second traitement thermique sans entreposage intermédiaire.

Le second traitement thermique peut s'effectuer comme indiqué ci-dessus pour le premier, c'est-à-dire par chauffage direct ou indirect à 50-150°C injection de vapeur et, après un temps d'attente de 1-600 s, par expansion dans un vase, ce qui produit un refroidissement à 50-100°C. Durant ce second traitement thermique , on stabilise les protéines liées par dénaturation partielle. Les liaisons ainsi renforcées sont suffisamment solides pour que les protéines ne puissent plus coaguler durant la stérilisation ultérieure.

On procède alors à une homogénéisation dans des conditions semblables à la seconde homogénéisation indiquée précédemmment et dans le même but, à savoir de désintégrer les grappes de globules gras formées. On refroidit ensuite l'homogénéisat à 0-20°C, de préférence à 4-8°C et on ajuste le cas échéant sa teneur en matière sèche à la valeur désirée du produit final par addition d'eau.

On procède enfin à la stérilisation du produit laitier, le cas échéant après un entreposage intermédiaire. Selon un premier mode de mise en oeuvre de cette stérilisation, on le conditionne dans des récipients, par exemple des boîtes métalliques, bouteilles en verre ou en matière plastique résistant à la chaleur, que l'on scelle hermétiquement, puis on traite les récipients dans un stérilisateur à 95-135°C pendant 30 s à 60 min., la limite supérieure de température correspondant à la durée la plus faible en une seule étape ou par palliers progressifs de température.

Dans une variante de la stérilisation, on effectue une stérilisation en ligne suivie d'un remplissage aseptique. Pour ce faire, on préchauffe le concentrat à 50 -90°C, on le stérilise en ligne par chauffage indirect ou direct, par exemple à 105-150°C pendant 2 s à 1 h., la limite supérieure de la température correspondant à la limite inférieure de la durée, et de préférence par haute température courte durée ou ultra haute température. On refroidit ensuite le produit laitier à 50-90°C, le cas échéant par expansion, puis on l'homogénéise, en un ou plusieurs passages et un ou deux étages, à 50-300 bar, de préférence en un passage d'abord à 200-250 bar au premier étage, puis environ 50 bar au second étage. On le refroidit enfin à 4-30°C, de préférence à environ 20°C et on le conditionne dans des emballages, par exemple des boîtes métalliques ou des briques en carton. Les opérations suivant la stérilisation s'opèrent naturellement de manière aseptique.

Le produit laitier préparé selon l'invention est stable à l'entreposage de la même manière que les produits courants contenant des sels de stabilisation. De plus il est stérilisable sans ces derniers additifs qui étaient jugés indispensables jusqu'à présent pour éviter la gélification et/ou la coagulation durant la stérilisation. De plus, il résiste parfaitement bien à l'acidité d'un extrait aqueux de café chaud sans produire de floculation lorsqu'on l'ajoute à un tel extrait.

Les exemples ci-après illustrent l'invention à l'aide des dessins annexés. Dans ces exemples, les parties et pourcentages sont pondéraux, sauf indication contraire.

Aux dessins,
la figure 1 est un schéma d'un mode de réalisation du procédé de l'invention,
la figure 2 est un schéma d'une première variante du premier traitement thermique compris entre les lignes en pointillés I et II de la figure 1,
la figure 3 est un schéma d'une seconde variante du premier traitement thermique compris entre les lignes en pointillés I et II de la figure 1,
la figure 4 est un schéma d'une troisième variante du premier traitement thermique compris entre les lignes en pointillés I et II de la figure 1.

### Exemple 1

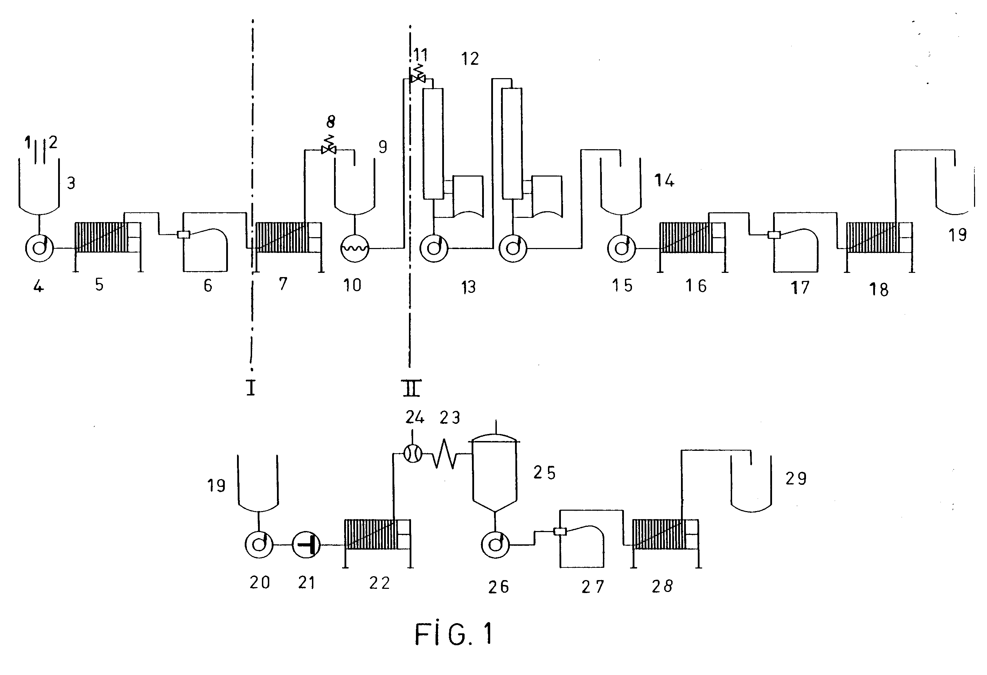

Dans cet exemple, le procédé est décrit en référence à la figure 1. On mélange 255 kg de lait entier cru contenant 3,8% de matière grasse et 9% de solides non gras du lait (1) et 0,86 kg de crème à 36% de matière grasse et 5,7% de solides non gras du lait (2) dans la cuve 3.

On fait passer le mélange à l'aide d'une pompe centrifuge 4 à travers l'échangeur à plaques 5 où il est préchauffé à 80°C, puis à travers l'homogénéisateur 6 où il est homogénéisé en deux étages d'abord à 250 bar puis à 50 bar. Le mélange passe ensuite dans l'échangeur à plaques 7 où il est porté à 118°C, puis il est refroidi par détente à 96°C à l'aide de la vanne réglée 8, puis maintenu à cette température pendant 8 min dans la cuve 9. La pompe à pistons rotatifs 10 le dirige ensuite via la vanne réglée 11 vers l'évaporateur à flot tombant à double effet 12 où il est concentré à 35% de matière sèche par expansion sous vide. Il est alors repris par les pompes 13 dans la cuve tampon 14 et de là par la pompe centrifuge 15 vers l'échangeur à plaques 16 où il est réchauffé à 65°C. Il passe ensuite à travers l'homogénéisateur 17 où il est homgénéisé en deux étages, d'abord à 75 bar puis à 25 bar, refroidi dans l'échangeur à plaques 18 à 4°C et laissé au repos dans la cuve tampon 19 à cette température pendant 12 h. Durant cette période on ajuste la quantité de matière sèche à 33% par addition d'eau. On reprend ensuite le concentrat par la pompe centrifuge 20 puis la pompe à pistons 21 le fait passer à travers l'échangeur à plaques 22 où il est préchauffé à 80°C, puis dans le tube 23 où il est porté à 135°C par injection directe de vapeur en 24 et où il est maintenu à cette température pendant 5 s. et enfin vers un vase d'expansion 25 où sa température chute à 78°C. Au bas du vase d'expansion la pompe centrifuge 26 reprend le concentrat et le dirige vers l'homogénéisateur 27 où il est homogénéisé en deux étages, d'abord à 75 bar, puis à 25 bar, puis dans l'échangeur à plaques 28 où il est refroidi à 4°C et enfin vers la cuve 29 en attente de remplissage.

On obtient 100 kg de lait évaporé contenant 10% de matière grasse lactique et 23% de solides non gras du lait. Après dosage dans des boîtes et sertissages des boîtes, on stérilise le produit à 118,3°C pendant 12 min (opérations non représentées). Le produit a la même stabilité à l'entreposage à température ambiante qu'un lait évaporé stabilisé avec sels de phosphate.

### Exemple 2

On procède comme à l'exemple 1 sauf que l'on met en oeuvre 243,87 kg de lait entier cru à 4,1% de matière grasse et 8,9% de solides non-gras du lait ainsi que 14,4 kg de lait écrémé à 0,01% de matière grasse et 9% de solides non-gras du lait. On obtient ainsi 100 kg de lait évaporé contenant 10% de matière grasse lactique et 23% de solides non-gras du lait. Le produit a la même stabilité à l'entreposage à température ambiante qu'un lait évaporé stabilisé avec sels de phosphate.

### Exemples 3-9

On procède comme à l'exemple 1 en mélangeant le lait et la crème de manière à obtenir les proportions indiquées dans les conditions opératoires indiquées au tableau 1 ci-après.

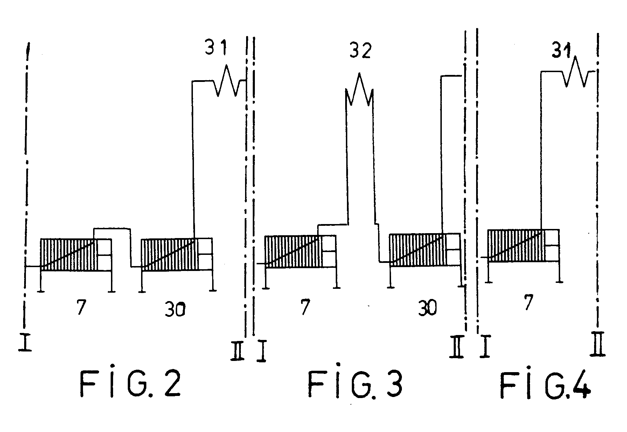

Dans ce tableau, les paramètres des différentes étapes des diverses variantes du procédé sont indiqués par référence aux appareils désignés par leurs chiffres respectifs sur les figures 1 à 4. Ainsi, les exemples 3, 4 et 9 correspondent à un traitement thermique avant évaporation utilisant les échangeurs à plaques 7 et 30, puis le tube d'attente 31 (figure 2). Les exemples 5 et 6 comprennent un traitement thermique avant évaporation semblable à celui de l'exemple 1 utilisant la vanne réglée 8 et la cuve 9 (figure 1). L'exemple 7 utilise pour le traitement thermique avant évaporation le tube d'attente 32 entre les échangeurs à plaques 7 et 30 (figure 3). A l'exemple 8, la vanne 11 est réglée de telle sorte que la température dans le tube d'attente 31 est la même qu'à la sortie de l'échangeur à plaques 7 (figure 4).

**TABLEAU 1**

| Exemple | 3 | 4 | 5 | 6 | 7 | 8 | 9 |
|---|---|---|---|---|---|---|---|
| Matière sèche % | 31 | 33 | 33 | 33 | 30 | 30 | 24 |
| Rapport matière grasse/solides non-gras % / % | 10/21 | 10/23 | 10/23 | 10/23 | 15/15 | 15/15 | 4/20 |

| Paramètres du procédé selon Fig. 1, 2, 3 et 4 chiffre | | | | | | | |
|---|---|---|---|---|---|---|---|
| 5 (°C) | 80 | 80 | 60 | 80 | 90 | 80 | 80 |
| 6 (bar) | 250 + 50 | 250 + 50 | 225 + 50 | 300 + 50 | 200 + 50 | 250 + 50 | 250+50 |
| 7 (°C) | 118 | 118 | 118 | 118 | 118 | 120 | 118 |
| 9 (°C/s) | - | - | 95/480 | 95/480 | - | - | - |
| 32,30 (s/°C) | - | - | - | - | 120/95 | 120/120 | - |
| 30,31 (°C/s) | 95/480 | 95/480 | - | - | - | - | 95/480 |
| 16 (°C) | 65 | 65 | 65 | 65 | 65 | 65 | 65 |
| 17 (bar) | 75 + 25 | 75 + 25 | 75 + 25 | 125 + 25 | 75 + 25 | 175 + 25 | 75+25 |
| 22 (°C) | 80 | 80 | 80 | 80 | 80 | 80 | 80 |
| 23,24 (°C) | 115 | 135 | 128 | 130 | 118 | 130 | 115 |
| 23 (s) | 120 | 5 | 5 | 10 | 240 | 5 | 120 |
| 25 (°C) | 78 | 78 | 78 | 78 | 78 | 78 | 78 |
| 27 (bar) | 75 + 25 | 75 + 25 | 75 +25 | 125 + 25 | 75 + 25 | 200 + 50 | 75+25 |
| 28 (°C) | 4 | 4 | 4 | 4 | 4 | 4 | 4 |

| Stérilisation en boîte | | | | | | | |
|---|---|---|---|---|---|---|---|
| °C / min | 118/12 | 120/10 | 118/12 | 118/12 | 118/12 | 118/12 | 118/12 |

Le produit a la même stabilité à l'entreposage à température ambiante qu'un lait évaporé stabilisé avec sels de phosphate.

### Exemple 10

On procède comme à l'exemple 1 jusqu'à la stérilisation. Pour effectuer celle-ci, on préchauffe le concentrat provenant de la cuve 29 dans un échangeur à plaques jusqu'à 80°C, puis on le stérilise à 120°C dans un échangeur à plaques et on le maintient pendant 7 min. à cette température dans un tube d'attente. On procède alors à son expansion dans un vase où sa température tombe à 78°C, on l'homogénéise en deux étages à 200 bar puis 50 bar, on refroidit l'homogénéisat à 20°C au moyen d'un échangeur à plaques, puis on remplit des boîtes que l'on scelle hermétiquement. L'expansion, l'homogénéisation, le refroidissement et le remplissage s'effectuent dans des conditions aseptiques.

Le produit a la même stabilité à l'entreposage à température ambiante qu'un lait évaporé stabilisé avec sels de phosphate.

### Exemple 11

On procède comme à l'exemple 3 jusqu'à la stérilisation. Pour ce faire, on préchauffe le concentrat provenant de la cuve 29 dans un échangeur à plaques à 75°C, puis on le stérilise à 140°C par injection directe de vapeur et on le maintient à cette température pendant 10 s. dans un tube (stérilisation à ultra haute température). Après refroidissement à 73°C dans un échangeur à plaques, on l'homogénéise en deux étages à 250 bar puis 50 bar, on refroidit l'homogénéisat à 20°C dans un échangeur à plaques, puis on remplit des briques en carton que l'on scelle hermétiquement. Toutes les étapes suivant la stérilisation sont mises en oeuvre aseptiquement. Le produit a la même stabilité à l'entreposage à température ambiante qu'un lait évaporé stabilisé avec sels de phosphate.

A titre de comparaison, un lait évaporé traité de la même manière mais sans les étapes d'homogénéisation du produit de départ, de traitement thermique de l'homogénéisat avant concentration, de traitement thermique et d'homogénéisation du concentrat décrites en détail à l'exemple 3, gélifierait rapidement après un traitement de stérilisation à ultra haute température.

## Revendications

1. Procédé de préparation d'un produit laitier évaporé contenant la matière grasse stable à l'entreposage et exempt d'additifs non-lactiques, dans lequel on traite thermiquement un produit laitier dont le rapport pondéral matière grasse : matière sèche non grasse est 0,1:1 à 1,2:1, on le concentre par évaporation jusqu'à une teneur en matière sèche de 20 à 40% en poids puis on stérilise le concentrat, caractérisé par le fait que l'on homogénéise le produit laitier, on traite thermiquement l'homogénéisat avant de le concentrer et l'on traite thermiquement puis homogénéise le concentrat avant de le stériliser.

2. Procédé selon la revendication 1, caractérisé par le fait que l'on remplit des récipients avec le produit laitier évaporé, que l'on scelle hermétiquement les récipients et qu'on les stérilise.

3. Procédé selon la revendication 1, caractérisé par le fait que l'on stérilise le produit laitier évaporé en ligne à haute température, courte durée ou à ultra haute température, que l'on homogénéise, que l'on refroidit et que l'on conditionne le produit laitier stérilisé aseptiquement.

4. Produit laitier évaporé obtenu par la mise en oeuvre du procédé selon l'une des revendications 1 à 3.

## Claims

1. A process for the production of an evaporated milk product containing fats which is stable in storage and free from non-lactic additives, in which a milk product having a ratio by weight of fats to non-fat dry matter of 0.1:1 to 1.2:1 is heat-treated, concentrated by evaporation to a dry matter content of 20 to 40% by weight and the concentrate is sterilized, characterized in that the milk product is homogenized, the homogenizate is heat-treated before being concentrated and the concentrate is heat-treated and then homogenized before being sterilized.

2. A process as claimed in claim 1, characterized in that containers are filled with the evaporated milk product, hermetically sealed and sterilized.

3. A process as claimed in claim 1, characterized in that the evaporated milk product is sterilized on-line at short-time high temperature or at ultra-high temperature, homogenized, cooled and the sterilized milk product is packed under aseptic conditions.

4. An evaporated milk product obtained by the process claimed in any of claims 1 to 3.

## Patentansprüche

1. Verfahren zur Herstellung eines eingedampften Milchprodukts, das lagerbeständiges Fett enthält und frei von Nichtmilch-Zusätzen ist, bei welchem man ein Milchprodukt wärmebehandelt, dessen Gewichstverhältnis von Fett zu Nichtfett-Trokkensubstanz 0,1:1 bis 1,2:1 beträgt, und durch Eindampfung auf einen Trockensubstanzgehalt von 20 bis 40 Gewichtsprozent konzentriert und dann das Konzentrat sterilisiert, dadurch gekennzeichnet, daß man das Milchprodukt homogenisiert, das Homogenisat wärmebehandelt, bevor es konzentriert wird, und das Konzentrat wärmebehandelt und dann homogenisiert, bevor es sterilisiert wird.

2. Verfahren nach Anspruch 1, dadurch gekennzeichnet, daß man Behälter mit dem eingedampften Milchprodukt füllt, die Behälter hermetisch verschließt und sie sterilisiert.

3. Verfahren nach Anspruch 1, dadurch gekennzeichnet, daß man das eingedampfte Milchprodukt im Behandlungsprozess bei hoher Temperatur kurzer Dauer oder bei Höchsttemperatur sterilisiert, daß man homogenisiert, daß man kühlt und daß man das sterilisierte Milchprodukt aseptisch verpackt.

4. In dem Verfahren nach einem der Ansprüche 1 bis 3 hergestelltes eingedampftes Milchprodukt.
